# EUROPEAN PATENT APPLICATION

(11) **EP 4 813 758 A1**
(43) Date of publication of application: **30.09.2026**
(21) Application number: 26166989.9
(22) Date of filing: 24.03.2026
(51) Int. Cl.: B60R 16/02

(54) **VEHICLE**

(30) Priority: 26.03.2025 JP 2025052556
(71) Applicant: Toyota Jidosha Kabushiki Kaisha, Toyota-shi, Aichi-ken 471-8571 (JP)
(72) Inventor: YONEZAWA, Shota, Toyota-shi, Aichi-ken, 471-8571 (JP); BABA, Ryusuke, Toyota-shi, Aichi-ken, 471-8571 (JP); MARUHASHI, Motokuni, Toyota-shi, Aichi-ken, 471-8571 (JP); KAWAMOTO, Naoya, Toyota-shi, Aichi-ken, 471-8571 (JP); KUMAZAWA, Kazuya, Toyota-shi, Aichi-ken, 471-8571 (JP); KIMURA, Kenta, Toyota-shi, Aichi-ken, 471-8571 (JP)
(74) Representative: TBK

(57) **Abstract**

A vehicle 10 includes a battery pack 13 and plural cable connecters 16A, 16B, 16C, 16D that are each electrically connected to the battery pack 13. The plural cable connecters 16A, 16B, 16C, 16D are arranged below a vehicle rear end portion of the battery pack 13. The plural cable connecters 16A, 16B, 16C, 16D are arranged alongside each other in a vehicle width direction. At least one out of the plural cable connecters 16A, 16B, 16C, 16D has a cable direction oriented in an inclined direction sloping toward a vehicle width direction one-side on progression toward the vehicle rear.

## Description

### BACKGROUND

### Technical Field

The present disclosure relates to a vehicle.

### Background Art

Japanese Patent Application Laid-Open (JP-A) No. 2024-004006 discloses a vehicle in which a battery pack is connected to a buck-boost converter through a second connecter or the like.

### SUMMARY OF INVENTION

### Technical Problem

Such a second connecter is normally configured as a cable connecter attached to one end of a cable.

An object of the present disclosure is to make wiring installation of a cable attached to a cable connecter easy to perform in a vehicle including a battery pack arranged below a vehicle cabin.

### Solution to Problem

A vehicle according to a first aspect includes a battery pack arranged below a vehicle cabin, and plural cable connecters that are each attached to one end of a cable and are electrically connected to the battery pack. The plural cable connecters are arranged below a vehicle rear end portion of the battery pack. The plural cable connecters are arranged alongside each other in a vehicle width direction. At least one out of the plural cable connecters has a cable direction oriented in an inclined direction sloping toward a vehicle width direction one-side on progression toward the vehicle rear.

In the present aspect, the vehicle includes the battery pack arranged below the vehicle cabin, and the plural cable connecters that are each attached to one end of a cable and are electrically connected to the battery pack. The plural cable connecters are arranged below the vehicle rear end portion of the battery pack.

Moreover, in the present aspect, the plural cable connecters are arranged alongside each other in the vehicle width direction, and at least one out of the plural cable connecters has a cable direction oriented in an inclined direction sloping toward the vehicle width direction one-side on progression toward the vehicle rear.

This thereby enables wiring installation of the cable attached to the cable connecter to be performed easily. For example, in cases in which a device that is the connection destination of the cable is positioned at the vehicle rear side with respect to the vehicle rear end portion of the battery pack, wiring installation can be performed on the cable while flexing the cable appropriately in the vehicle width direction. Moreover, for example, in cases in which a device that is the connection destination of the cable is positioned further to the vehicle front side than the battery pack, the cable can be passed through a space at the vehicle width direction one-side of the battery pack.

Note that reference the "cable direction" for a cable connecter means a direction in which a cable attached to the cable connecter leads out from the cable connecter.

Note that although in the following exemplary embodiments the battery pack includes a battery case 40 and an equipment case 50, with the equipment case 50 arranged above the battery case 40 such that at least part of the equipment case 50 overlaps with at least part of the battery case 40 in plan view, the battery pack of the present aspect is not limited thereto.

Note that although in the following exemplary embodiments the number of the plural cable connecters is four, the present aspect is not limited thereto. The number of the plural cable connecters may be two or three, or may be five or more.

A vehicle according to a second aspect is the first aspect, wherein, from out of the plural cable connecters, a cable connecter furthest toward the vehicle width direction one-side has a cable direction oriented in a direction substantially parallel to a direction toward the vehicle width direction one-side.

In the present aspect, from out of the plural cable connecters, the cable connecter furthest toward the vehicle width direction one-side has a cable direction oriented in a direction substantially parallel to a direction toward the vehicle width direction one-side.

This thereby enables wiring installation of the cable attached to the cable connecter to be performed easily toward the vehicle front side.

Note that directions substantially parallel to a direction toward the vehicle width direction one-side means directions encompassing a range of inclination angle up to ± 5° with respect to the direction toward the vehicle width direction one-side.

A vehicle according to a third aspect is the second aspect, wherein the cable connecter furthest toward the vehicle width direction one-side is connected to equipment arranged in a vehicle front section.

In the present aspect, the cable connecter furthest toward the vehicle width direction one-side is connected to the equipment arranged in the vehicle front section.

This thereby enables efficient wiring installation.

Note that although in the following exemplary embodiments the "equipment arranged in the vehicle front section" is a vehicle drive motor installed to a front section of the vehicle, the "equipment arranged in the vehicle front section" of the present aspect is not limited thereto.

A vehicle according to a fourth aspect is the second aspect or the third aspect, wherein all of the cable connecters from out of the plural cable connecters except the cable connecter furthest toward the vehicle width direction one-side each have a cable direction oriented in an inclined direction sloping toward the vehicle width direction one-side on progression toward the vehicle rear.

In the present aspect, all of the cable connecters from out of the plural cable connecters except the cable connecter furthest toward the vehicle width direction one-side each have a cable direction oriented in an inclined direction sloping toward the vehicle width direction one-side on progression toward the vehicle rear.

This thereby enables the plural cable connecters to be arranged in closer proximity to each other in the width direction than embodiments in which any of the cable connecters except the cable connecter furthest to the vehicle width direction one-side is arranged with a cable direction oriented in a direction substantially parallel to a direction toward the vehicle width direction one-side.

A vehicle according to a fifth aspect is the fourth aspect, wherein all of the cable connecters from out of the plural cable connecters except the cable connecter furthest toward the vehicle width direction one-side have cable directions oriented in directions parallel to each other.

In the present aspect all of the cable connecters from out of the plural cable connecters except the cable connecter furthest toward the vehicle width direction one-side have cable directions oriented in directions parallel to each other.

This thereby enables the plural cable connecters to be arranged in closer proximity to each other in the width direction more efficiently.

A vehicle according to a sixth aspect is the fourth or the fifth aspect, wherein all of the cable connecters from out of the plural cable connecters except the cable connecter furthest toward the vehicle width direction one-side and the cable connecter furthest toward a vehicle width direction other-side have respective width dimensions smaller than width dimensions of the cable connecter furthest toward the vehicle width direction one-side and the cable connecter furthest toward the vehicle width direction other-side.

However, sometimes there is a desire that the cable connecter furthest toward the vehicle width direction other-side is a connecter compatible with a large current. On the other hand, there are various auxiliary equipment present in the vehicle, and there is also a desire to supply power to such auxiliary equipment too. The various auxiliary equipment are arranged at various positions in the vehicle.

To address this issue, in the present aspect, all of the cable connecters from out of the plural cable connecters except the cable connecter furthest toward the vehicle width direction one-side and the cable connecter furthest toward a vehicle width direction other-side have respective width dimensions smaller than width dimensions of the cable connecter furthest toward the vehicle width direction one-side and the cable connecter furthest toward the vehicle width direction other-side.

Wiring installation for supplying power to the auxiliary equipment arranged at various positions in the vehicle is accordingly performed easily. For example, the auxiliary equipment may be positioned further forward than the cable connecters and may be positioned further rearward thereof.

Note that the width dimension of a cable connecter means a dimension in a direction that is perpendicular to the height direction and is perpendicular to the cable direction.

As described above, the present disclosure enables wiring installation of cables attached to cable connecters to be performed easily in a vehicle including a battery pack arranged below a vehicle cabin.

### BRIEF DESCRIPTION OF DRAWINGS

Exemplary embodiments of the present disclosure will be described in detail based on the following figures, wherein:
Fig. 1 is a schematic side view of a vehicle installed with a battery pack;
Fig. 2 is a schematic cross-section illustrating an enlargement of a vicinity of a rear end portion of a battery pack;
Fig. 3 is a bottom view of the vicinity of plural cable connecters as viewed from below a vehicle; and
Fig. 4 is a plan view illustrating a battery case and a battery.

### DESCRIPTION OF EMBODIMENTS

Description follows regarding preferable exemplary embodiments of the present disclosure.

Note that as appropriate in the drawings, arrow FR indicates a vehicle forward direction, arrow UP indicates a vehicle upward direction, and arrow LH indicates a vehicle width direction left side. Moreover, when front and rear, up and down, and left and right directions are employed in the following description, unless explicitly stated otherwise, these respectively indicate front and rear in the vehicle front-rear direction, up and down in the vehicle height direction, and left and right in the vehicle width direction.

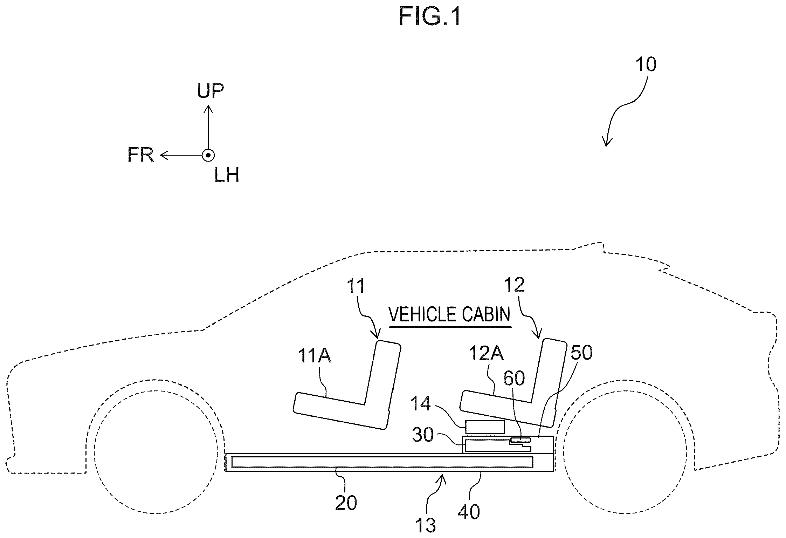

As illustrated in Fig. 1, vehicle 10 includes front seats 11 and rear seats 12 provided in a vehicle cabin. The front seats 11 are configured by a driver's seat and a front passenger seat. The rear seats 12 are, for example, a bench seat.

### Battery Pack 13

The vehicle 10 includes a battery pack 13 arranged below the vehicle cabin.

The battery pack 13 includes a battery 20, internal battery equipment 30 electrically connected to the battery 20 and an information processing device 60, and housing cases 40, 50 respectively housing these.

The housing cases 40, 50 include a battery case 40 housing the battery 20, and an equipment case 50 housing the internal battery equipment 30 and the information processing device 60.

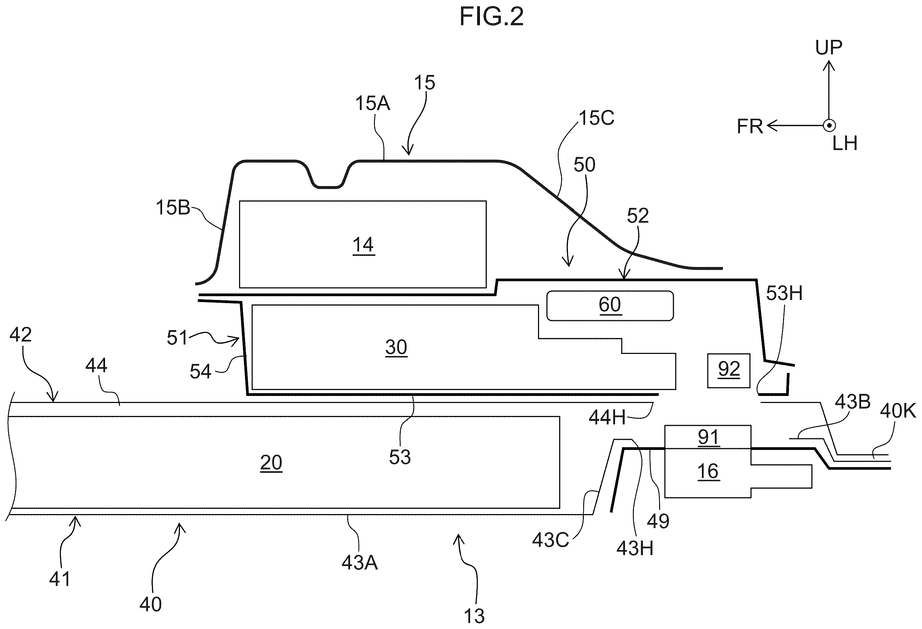

The equipment case 50 is arranged above the battery case 40 such that at least part of the equipment case 50 overlaps with at least part of the battery case 40 in plan view. Specifically, as illustrated in Fig. 2, the equipment case 50 is arranged above the battery case 40 such that the entire equipment case 50 overlaps with part of the battery case 40 in plan view.

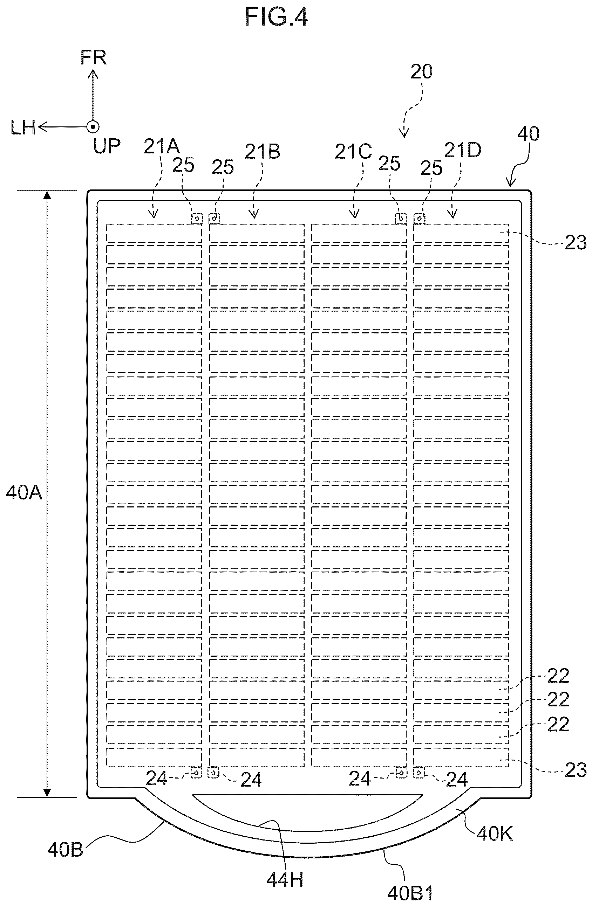

As illustrated in Fig. 4, the battery 20 is provided in a region extending in a front-rear direction (a rectangular region in plan view). As a result, as illustrated in Fig. 1, part of the battery 20 overlaps with at least part of seating faces 11A of the front seats 11 in plan view, and another part of the battery 20 overlaps with at least part of seating faces 12A of the rear seats 12 in plan view. Specifically, a front end of the battery 20 is positioned further forward than a front end of the seating faces 11A of the front seats 11. A rear end of the battery 20 is positioned further rearward than a front end of the seating faces 12A of the rear seats 12.

The battery 20 includes plural battery modules 21A, 21B, 21C, 21D. The number of the battery modules 21 provided to the battery 20 is, for example, an even number, and is specifically four. Reference will simply be made to battery modules 21 when describing the plural battery modules 21A, 21B, 21C, 21D without particular discrimination therebetween.

The plural battery modules 21A, 21B, 21C, 21D are arranged alongside each other in the vehicle width direction. Note that the battery 20 does not include a part where the battery modules 21 are arranged alongside each other in the height direction.

Each of the plural battery modules 21A, 21B, 21C, 21D includes plural battery cells 22 arranged alongside each other in the vehicle front-rear direction. The battery cells 22 each have similar configuration to each other.

The internal battery equipment 30 is a junction block 30. The internal battery equipment 30 includes a housing, and electric components (non-illustrated) such as bus bars, relays, fuses and the like housed in the housing 31. The relays include a system main relay.

The internal battery equipment 30 is arranged above the battery 20 and below the rear seats 12 such that, in plan view, at least part thereof overlaps with at least part of the battery 20, and overlaps with at least part of the seating faces 12A of the rear seats 12. Specifically, the internal battery equipment 30 is arranged above the battery 20 and below the rear seats 12 such that part thereof overlaps with part of the battery 20 in plan view, and the entirety thereof overlaps with part of the seating face 12A of the rear seats 12 in plan view.

The information processing device 60 is a battery ECU serving as a "control device". The information processing device 60, for example, controls relays provided in the internal battery equipment 30.

The information processing device 60 is arranged above the internal battery equipment 30 such that at least part thereof overlaps with at least part of the internal battery equipment 30 in plan view. Specifically, the information processing device 60 is arranged above the internal battery equipment 30 such that the entirety thereof overlaps with at least part of the internal battery equipment 30 in plan view.

### External Battery Equipment 14

The vehicle 10 includes external battery equipment 14 that is arranged externally to the housing cases 40, 50, and is electrically connected to the battery pack 13.

The external battery equipment 14 is a device including a function as a so-called On-Board Charger (OBC). In other words, the external battery equipment 14 includes a function to transform externally supplied alternating current power into direct current power usable by the battery 20 of the vehicle 10. This function is exhibited when utilizing a domestic power source to charge the battery pack 13 with an appropriate voltage and current. The external battery equipment 14 also includes a DC-DC converter function.

The external battery equipment 14 is arranged above the battery pack 13 and below the rear seats 12 such that at least part thereof overlaps with at least part of the internal battery equipment 30 in plan view, and at least part thereof overlaps with at least part of the seating face 12A of the rear seats 12 in plan view. Specifically, the external battery equipment 14 is arranged above the battery pack 13 and below the rear seats 12 such that at least part thereof overlaps with at least part of the internal battery equipment 30 in plan view, and the entirety thereof overlaps with at least part of the seating face 12A of the rear seats 12 in plan view.

The external battery equipment 14 is arranged above the equipment case 50 such that at least part thereof overlaps with at least part of the equipment case 50 in plan view. Specifically, the external battery equipment 14 is arranged above the equipment case 50 such that the entirety thereof overlaps with at least part of the equipment case 50 in plan view.

### External Equipment Cover 15

The vehicle 10 includes an external equipment cover 15.

The external equipment cover 15 covers the external battery equipment 14 from an upper side thereof. The external equipment cover 15 is arranged below the rear seats 12 and supports the rear seats 12. The external equipment cover 15 is, for example, formed by pressing a steel sheet material or the like.

The external equipment cover 15 includes an upper wall 15A covering the external battery equipment 14 from above, a front wall 15B covering the external battery equipment 14 from the front, and an inclined wall 15C extending diagonally rearward from the upper wall 15A.

### Cable Connecters 16

The vehicle 10 includes plural cable connecters 16A, 16B, 16C, 16D that are connected to the battery pack 13 for supplying electrical power to each vehicle section. The plural cable connecters 16A, 16B, 16C, 16D will be simply referred to as cable connecter 16 when describing common features thereof, without particularly discriminating therebetween.

As illustrated in Fig. 2, the cable connecter 16 is attached below a rear end portion of the battery pack 13. Specifically, the cable connecter 16 is attached, from below, to a part of the housing cases 40, 50 further rearward than the battery 20. More specifically, the cable connecter 16 is attached, from below, to a part of the battery case 40 corresponding to a connecter block 49.

A direction of connection of the cable connecter 16 to the battery pack 13 is the upward direction. Specifically, the battery pack 13 includes an internal connecter 91 connected to the cable connecter 16. The internal connecter 91 is fixed to the connecter block 49. The cable connecter 16 is connected to the internal connecter 91 of the battery pack 13 from below. Note that the internal connecter 91 is electrically connected to the internal battery equipment 30 through a non-illustrated bus bar, a power distribution unit 92, described later, and the like.

### Power Distribution Unit 92

The battery pack 13 includes the power distribution unit 92 housed in the housing cases 40, 50.

The power distribution unit 92 is connected to the internal battery equipment 30 through non-illustrated bus bars, and is also connected to plural internal connecters 91 through non-illustrated bus bars. This means that the power distribution unit 92 functions so as to distribute power using the plural provided cable connecters 16.

The power distribution unit 92 is arranged further rearward than the battery 20 and the internal battery equipment 30 so as not to overlap with the battery 20 and the internal battery equipment 30 in plan view.

The power distribution unit 92 is arranged at the rear of the internal battery equipment 30 such that at least part thereof overlaps with at least part of the internal battery equipment 30 when viewed face-on.

### Assembly to Vehicle Body Framework Task

The battery pack 13, the external battery equipment 14, and the external equipment cover 15 are integrated together as a single body prior to being assembled to the vehicle body framework. Then, in a state in which the battery pack 13, the external battery equipment 14, the external equipment cover 15, and the like have been integrated together as a single body, they are assembled, from below, to the vehicle body framework including a left-right pair of rockers (side sills). The cable connecter 16 is then connected to the battery pack 13.

More detailed description follows regarding some configuration elements.

### Battery Case 40

The battery case 40 is positioned so as to be entirely lower than a floor surface of a vehicle cabin.

As illustrated in Fig. 4, the battery case 40 includes a battery case main body 40A, and a battery case rearward extension 40B.

The battery case main body 40A is a part where the battery 20 is housed, and the battery case rearward extension 40B is a part where the battery 20 is not housed. The battery case rearward extension 40B is provided further rearward than the battery case main body 40A. The internal space of the battery case 40 is extended rearward due to the battery case rearward extension 40B being provided. The space inside the battery case rearward extension 40B has a smaller height dimension than the space inside the battery case main body 40A.

The battery case main body 40A has a substantially rectangular profile in plan view. Specifically, the battery case main body 40A has a substantially rectangular profile in plan view, with a long edge along the front-rear direction and a short edge along the vehicle width direction.

The battery case rearward extension 40B has a shape in which a vehicle width dimension decreases on progression toward the rear side. This thereby enables the internal space of the battery case 40 to be extended while avoiding interference with configuration in the vicinity of the rear wheels of the vehicle 10. A rear side edge 40B 1 of the battery case rearward extension 40B is configured with a profile so as to have a convex bow shape toward the rear. The vehicle width direction dimension at a front end of the battery case rearward extension 40B is smaller than a vehicle width direction dimension of the battery case main body 40A. Specifically, the vehicle width direction dimension at the front end of the battery case rearward extension 40B is in a range of from 60% to 90% of the vehicle width direction dimension of the battery case main body 40A.

The battery case 40 includes a battery case lower 41 and a battery case upper 42.

The battery case lower 41 includes a first lower wall 43A. The first lower wall 43A is provided to the battery case main body 40A. The first lower wall 43A has a shape extending in both the front-rear direction and the vehicle width direction, and is positioned directly below the battery 20.

The battery case lower 41 includes a second lower wall 43B. The second lower wall 43B is provided to the battery case rearward extension 40B. The second lower wall 43B is positioned further rearward than the first lower wall 43A. The second lower wall 43B is positioned further upward than the first lower wall 43A. The second lower wall 43B includes a connecter block hole 43H.

The battery case 40 includes a connecter block 49 attached to the battery case lower 41 so as to close up the connecter block hole 43H. The connecter block 49 is attached to the battery case lower 41 from below by fastenings or the like. The connecter block 49 is, for example, a die-cast component.

The battery case lower 41 includes a connection upright wall 43C to connect a rear end of the first lower wall 43A and a front end of the second lower wall 43B together. The connection upright wall 43C extends in a direction sloping rearward on progression upward.

The battery case upper 42 includes an upper wall 44. The upper wall 44 has a shape extending in both the front-rear direction and vehicle width direction, and covers the battery 20 from above. The upper wall 44 functions as a floor panel configuring part of a floor of the vehicle cabin. This means that the vehicle 10 does not include another floor panel arranged above the upper wall 44.

The upper wall 44 includes an upper wall opening portion 44H piercing through the upper wall 44. The upper wall opening portion 44H is provided at a position corresponding to the battery case rearward extension 40B. At least part of the upper wall opening portion 44H overlaps with at least part of the connecter block hole 43H in plan view.

The part of the upper wall 44 where the upper wall opening portion 44H is provided is positioned at the same height in the height direction as the part of the upper wall 44 overlapping with the battery 20 in plan view.

The battery case 40 includes a flange 40K formed where part of the battery case lower 41 and part of the battery case upper 42 are joined together. The flange 40K has a thickness direction oriented in the height direction. The flange 40K is provided contiguously without interruption around the entire periphery of the outer edge of the battery case 40 in plan view of the battery case 40. The flange 40K is positioned higher than the first lower wall 43A and lower than the upper wall 44. The flange 40K is positioned lower than the second lower wall 43B.

### Equipment Case 50

The equipment case 50 includes an equipment case lower 51 and an equipment case upper 52.

The equipment case lower 51 and the equipment case upper 52 are both die-cast components, and specifically are aluminum die-cast components. A sealing member (omitted in the drawings) is arranged between the equipment case lower 51 and the equipment case upper 52. The thereby obtains a structure in which the waterproofing properties of the interior of the equipment case 50 are secured.

The equipment case lower 51 includes a lower wall 53 and side walls 54.

The lower wall 53 includes a lower wall opening portion 53H that is a hole piercing through the lower wall 53. The lower wall opening portion 53H is provided such that at least part thereof overlaps with at least part of the upper wall opening portion 44H of the battery case upper 42 in plan view. Electrical connection between components inside the battery case 40, such as the battery 20 and the like, and components inside the equipment case 50, such as the internal battery equipment 30 and the like, is realized through the upper wall opening portion 44H of the battery case upper 42 and the lower wall opening portion 53H of the equipment case lower 51.

The lower wall 53 has a thickness direction oriented in the height direction, and extends in both the front-rear direction and the vehicle width direction. The lower wall 53 retains the internal battery equipment 30 through plural bosses (omitted in the drawings) provided to the lower wall 53, and fastenings members (omitted in the drawings).

The equipment case upper 52 includes an upper wall 55. The upper wall 55 covers the internal battery equipment 30 from above.

### Plural Cable Connecters 16A, 16B, 16C, 16D

The plural cable connecters 16A, 16B, 16C, 16D include a first cable connecter 16A, a second cable connecter 16B, a third cable connecter 16C, and a fourth cable connecter 16D.

The cable connecters 16 are each attached to one end of a cable (omitted in the drawings). The plural cable connecters 16A, 16B, 16C, 16D are arrayed along the vehicle width direction. The plural cable connecters 16A, 16B, 16C, 16D are each arranged so as to entirely overlap with part of the battery case 40 in bottom view. As illustrated in Fig. 2, the cable connecters 16 are arranged so as not to project below the lower face of the first lower wall 43A of the battery case 40.

From out of the plural cable connecters 16A, 16B, 16C, 16D, the first cable connecter 16A is positioned furthest to a vehicle width direction one-side. The first cable connecter 16A is oriented with its cable direction substantially parallel to a direction toward the vehicle width direction one-side. Note that reference to the "cable direction" for a cable connecter means a direction in which a cable attached to the cable connecter leads out from the cable connecter. Directions substantially parallel to a direction toward the vehicle width direction one-side means directions encompassing a range of inclination angle up to ± 5° with respect to the direction toward the vehicle width direction one-side.

The first cable connecter 16A is connected to equipment arranged in a vehicle front section through a cable or the like. This equipment is, for example, a vehicle drive motor installed to a front section of the vehicle 10.

The second cable connecter 16B, the third cable connecter 16C, and the fourth cable connecter 16D each have a cable direction oriented in an inclined direction sloping toward the vehicle width direction one-side on progression toward the vehicle rear. The second cable connecter 16B, the third cable connecter 16C, and the fourth cable connecter 16D have cable directions oriented in directions parallel to each other. An angle of the cable directions of the second cable connecter 16B, the third cable connecter 16C, and the fourth cable connecter 16D with respect to the vehicle rearward direction is, for example, from 25° to 45°.

A width dimension of the second cable connecter 16B is smaller than a width dimension of the first cable connecter 16A and is smaller than a width dimension of the fourth cable connecter 16D.

A width dimension of the third cable connecter 16C is smaller than a width dimension of the first cable connecter 16A and is smaller than a width dimension of the fourth cable connecter 16D.

The width dimension of a cable connecter means a dimension in a direction that is perpendicular to the height direction and is perpendicular to the cable direction.

The fourth cable connecter 16D is connected to equipment arranged in a vehicle rear section through a cable or the like. Such equipment is, for example, a vehicle drive motor installed to the vehicle rear section. Such equipment may, for example, be arranged further rearward than a rear end of the battery pack 13 at a vehicle width direction central position. The cable direction of the fourth cable connecter 16D is an inclined direction sloping toward the vehicle width direction one-side on progression toward the vehicle rear, and so this enables wiring installation to be performed on a cable attached to the fourth cable connecter 16D while flexing the cable appropriately in the vehicle width direction.

The plural cable connecters 16A, 16B, 16C, 16D are, as a whole, arranged at positions shifted toward the vehicle width direction one-side with respect to the vehicle width direction central position. Specifically, however, the fourth cable connecter 16D is positioned further toward a vehicle width direction other-side than the vehicle width direction central position of the vehicle. The third cable connecter 16C is positioned further toward the vehicle width direction one-side than the vehicle width direction central position of the vehicle.

### Operation and Advantageous Effects

Next, description follows regarding the operation and advantageous effects of the present exemplary embodiment.

In the present exemplary embodiment, as illustrated in Fig. 1 and Fig. 2, the vehicle 10 includes the battery pack 13 arranged below the vehicle cabin, and the plural cable connecters 16A, 16B, 16C, 16D that are each attached to one end of a cable and also electrically connected to the battery pack 13. The plural cable connecters 16A, 16B, 16C, 16D are arranged below a vehicle rear end portion of the battery pack 13.

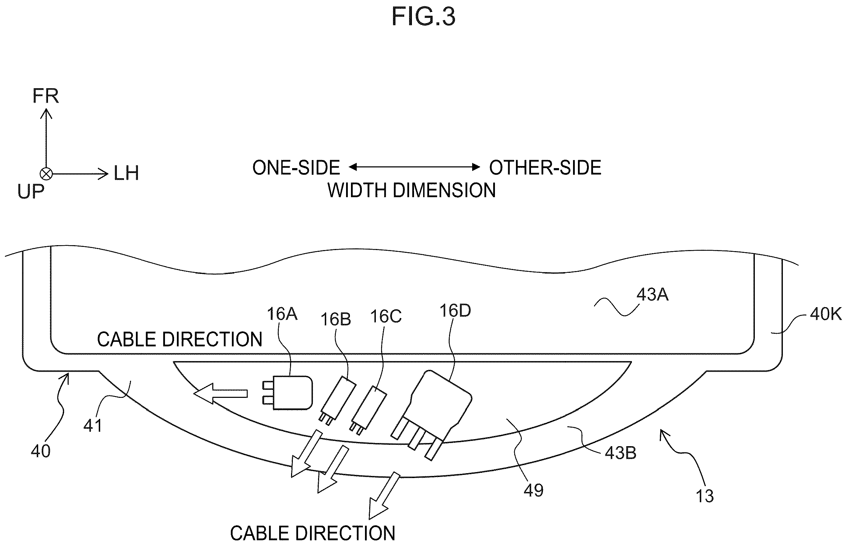

Moreover, in the present exemplary embodiment, as illustrated in Fig. 3, the plural cable connecters 16A, 16B, 16C, 16D are arranged alongside each other in the vehicle width direction. At least one out of the plural cable connecters 16A, 16B, 16C, 16D has a cable direction oriented in an inclined direction sloping toward the vehicle width direction one-side on progression toward the vehicle rear. Note that reference to the "cable direction" for a cable connecter means a direction in which a cable attached to the cable connecter leads out from the cable connecter.

This means that wiring installation can be performed easily on the cables attached to the cable connecters 16. For example, in cases in which a device that is the connection destination of the cable is positioned at the vehicle rear side with respect to the rear end of the battery pack 13, wiring installation can be performed on the cable while flexing the cable appropriately in the vehicle width direction. Moreover, for example, in cases in which a device that is the connection destination of the cable is positioned further to the vehicle front side than the battery pack 13, the cable can be passed through a space at the vehicle width direction one-side of the battery pack 13.

Moreover, in the present exemplary embodiment, the cable connecter 16A furthest toward the vehicle width direction one-side from out of the plural cable connecters 16A, 16B, 16C, 16D has a cable direction oriented in a direction substantially parallel to a direction toward the vehicle width direction one-side. Note that directions substantially parallel to a direction toward the vehicle width direction one-side means directions encompassing a range of inclination angle up to ± 5° with respect to the direction toward the vehicle width direction one-side.

This accordingly means that wiring installation of the cable attached to the cable connecter 16A can be performed easily toward the vehicle front side.

Moreover, in the present exemplary embodiment, although omitted in the drawings, the cable connecter 16A furthest toward the vehicle width direction one-side is connected to equipment arranged in a vehicle front section.

This thereby enables efficient wiring installation to be performed.

Moreover, from out of the plural cable connecters 16A, 16B, 16C, 16D in the present exemplary embodiment, all of the cable connecters 16B, 16C, 16D except the cable connecter 16A furthest to the vehicle width direction one-side each have a cable direction oriented in an inclined direction sloping toward the vehicle width direction one-side on progression toward the vehicle rear.

This accordingly means that the plural cable connecters 16A, 16B, 16C, 16D can be arranged in closer proximity to each other in the width direction than embodiments in which any of the cable connecters 16B, 16C, 16D except the cable connecter 16A furthest to the vehicle width direction one-side is arranged with a cable direction oriented in a direction substantially parallel to a direction toward the vehicle width direction one-side.

Moreover, in the present exemplary embodiment, from out of the plural cable connecters 16A, 16B, 16C, 16D, all of the cable connecters 16B, 16C, 16D except the cable connecter 16A furthest to the vehicle width direction one-side have cable directions oriented in directions parallel to each other.

This accordingly enables the plural cable connecters 16A, 16B, 16C, 16D to be more efficiently arranged in close proximity to each other in the width direction.

Sometimes there is a desire for the cable connecter 16D furthest to the vehicle width direction other-side to be a connecter compatible with a large current. On the other hand, there are various auxiliary equipment present in the vehicle 10, and there is also a desire to supply power to such auxiliary equipment too. These auxiliary equipment are arranged at various positions in the vehicle 10.

In order to address this issue, in the present exemplary embodiment, from out of the plural cable connecters 16A, 16B, 16C, 16D, the respective width dimensions of all of the cable connecters 16 except the cable connecter 16A furthest toward the vehicle width direction one-side and the cable connecter 16D furthest to the vehicle width direction other-side are smaller than the width dimensions of the cable connecter 16A furthest toward the vehicle width direction one-side and the cable connecter 16D furthest toward the vehicle width direction other-side. Note that the cable connecter width dimension means a dimension in a direction that is perpendicular to the height direction and is perpendicular to the cable direction.

Wiring installation for supplying power to the auxiliary equipment arranged at various positions in the vehicle 10 is accordingly performed easily. For example, the auxiliary equipment may be positioned further forward than the cable connecters 16 and may be positioned further rearward thereof.

Preferable exemplary embodiments of the present disclosure have been described above, however the present disclosure is not limited to the above description.

### Explanation of Reference Numerals

10 vehicle
13 battery pack
16 cable connecter
16A first cable connecter
16B second cable connecter
16C third cable connecter
16D fourth cable connecter

## Claims

1. A vehicle comprising:
a battery pack arranged below a vehicle cabin; and
a plurality of cable connecters that are each attached to one end of a cable and are electrically connected to the battery pack; wherein
the plurality of cable connecters are arranged below a vehicle rear end portion of the battery pack;
the plurality of cable connecters are arranged alongside each other in a vehicle width direction; and
at least one out of the plurality of cable connecters has a cable direction oriented in an inclined direction sloping toward a vehicle width direction one-side on progression toward the vehicle rear.

2. The vehicle of claim 1, wherein, from out of the plurality of cable connecters, a cable connecter furthest toward the vehicle width direction one-side has a cable direction oriented in a direction substantially parallel to a direction toward the vehicle width direction one-side.

3. The vehicle of claim 2, wherein the cable connecter furthest toward the vehicle width direction one-side is connected to equipment arranged in a vehicle front section.

4. The vehicle of claim 2, wherein all of the cable connecters from out of the plurality of cable connecters except the cable connecter furthest toward the vehicle width direction one-side each have a cable direction oriented in an inclined direction sloping toward the vehicle width direction one-side on progression toward the vehicle rear.

5. The vehicle of claim 4, wherein all of the cable connecters from out of the plurality of cable connecters except the cable connecter furthest toward the vehicle width direction one-side have cable directions oriented in directions parallel to each other.

6. The vehicle of claim 4, wherein all of the cable connecters from out of the plurality of cable connecters except the cable connecter furthest toward the vehicle width direction one-side and the cable connecter furthest toward a vehicle width direction other-side have respective width dimensions smaller than width dimensions of the cable connecter furthest toward the vehicle width direction one-side and the cable connecter furthest toward the vehicle width direction other-side.
